Europäisches Patentamt

European Patent Office

Office européen des brevets

(11) Publication number: **0 341 932**
**A2**

# (12) EUROPEAN PATENT APPLICATION

(21) Application number: **89304581.5**

(22) Date of filing: **05.05.89**

(51) Int. Cl.⁴: **G01M 3/04 , G01M 3/16**

(30) Priority: **09.05.88 JP 60041/88 U**

(43) Date of publication of application:
**15.11.89 Bulletin 89/46**

(84) Designated Contracting States:
**AT BE CH DE ES FR GB GR IT LI LU NL SE**

(71) Applicant: **JUNKOSHA CO. LTD.**
**25-25, Miyasaka 2-chome**
**Setagaya-ku Tokyo 156(JP)**

(72) Inventor: **Kojima, Kazuyuki**
**1768 Sasai**
**Sayama-shi Saitama(JP)**
Inventor: **Akiba, Juji**
**1-27-202, 494 Shimo-Kayama Hitaka-machi**
**Iruma-gun Saitama(JP)**
Inventor: **Kanoto, Hideki**
**30-7 Shin-machi**
**Hannoh-shi Saitama(JP)**

(74) Representative: **Knott, Stephen Gilbert et al**
**MATHISEN, MACARA & CO. The Coach**
**House 6-8 Swakeleys Road**
**Ickenham Uxbridge Middlesex UB10 8BZ(GB)**

(54) **A leak detecting sensor.**

(57) A leakage sensor for detecting leakage of electrically conductive liquids comprises a pair of spaced electrical conductors (11,11) installed parallel to eachother on the surface of an electrically insulating tape (10), and a layer of material (13) which covers the conductors and which is capable of absorbing the liquid to be detected, the top surface of the covering layer (13) being exposed to the environment.

EP 0 341 932 A2

_Fig.1._

## A LEAK DETECTING SENSOR

The present invention relates to a leakage sensor in tape-form for detecting leakage of electrically conductive liquids.

A well known example of a leakage sensor of this type is disclosed in Japanese Laid-Open Utility Model Application No. 61-158847. As is shown in Figure 4 of the accompanying drawings, this known leakage sensor comprises two electrical conductors 2,2 which are installed, spaced from each other, on the top surface of a water-absorbent tape 1. The conductors are covered by an insulating layer 4 using an adhesive layer 3 interprosed between the tape 1 and the insulating layer 4. A tacky adhesive layer 6 having a multiplicity of small perforations 5 is provided on the bottom surface of the water-absorbent tape 1 for the purpose of attaching the sensor to the place where leakage detection is to be performed.

For example, in a situation where water leakage caused by corrosion of a pipe P is to be detected, the sensor is attached to the external surface of the pipe P by means of the tacky adhesive layer 6. In operation, leaking liquid penetrates into the interior of the sensor through the small perforations 5 formed in the tacky adhesive layer 6, this leakage liquid thus passing through the water-absorbing tape 1 to short-circuit the conductors 2,2 so that the leakage can be detected by electrical means connected to the conductors.

However, although this known sensor operates with reasonably good sensitivity when leaking water is able to penetrate through the tacky adhesive layer 6 on the underside of the sensor, it does not operate very effectively when it is the top surface of the sensor which is exposed to the leaking liquid since the top surface of the absorbent tape 1 is covered by the adhesive layer 3 and insulating layer 4. Thus, although the sensor is suitable for the detection of water leakage caused by the corrosion of pipes, it is not suitable for the detection of wet diapers in clinics and child welfare centres for example. The reason for this is that, when the sensor is used to detect wet diapers, it is adhesively bonded to the interior surface of the diaper cover, and the wetness of the cloth of the diaper itself must be detected in this manner.

With the aim of providing a leakage sensor which exhibits high sensitivity with respect to water contacting the top surface of the sensor, according to the invention there is provided a leakage sensor for detecting leakage of electrically conductive liquids comprising a pair of spaced electrical conductors mounted substantially parallel to each other on the surface of an electrically insulating tape, and a layer of material capable of absorbing the leakage liquid to be detected covering the conductors and having its outer surface exposed to the environment.

The conductors are preferably formed by foil strips or by wires.

The material which is capable of absorbing the leakage liquid to be detected may be a non-woven fabric.

Thus, a leakage sensor in accordance with the invention is characterized by the fact that a pair of electrical conductors are installed on the surface of an insulating tape so that the conductors are spaced from each other, these conductors are covered by a layer of a liquid-absorbing material, and the top surface of this covering layer is exposed to the environment.

In use, any leaking liquid contacting the top surface of the sensor permeates directly through the covering layer, the top surface of which is exposed, and short-circuits the two conductors, this short-circuit being detected by conventional means connected to the conductors.

A preferred embodiment of the present invention will now be described, by way of example only, with reference to the accompanying drawings, in which:

Figure 1 is a part perspective, part sectional view of one example of the leakage sensor in accordance with the invention;

Figure 2 is a perspective view of the sensor of Figure 1 in the form of a tape rolled on a dispenser;

Figure 3 is a perspective view of a terminal end formed on a sensor in accordance with the invention;

Figure 4 is a view similar to that of Figure 1 but showing a leakage sensor of known construction.

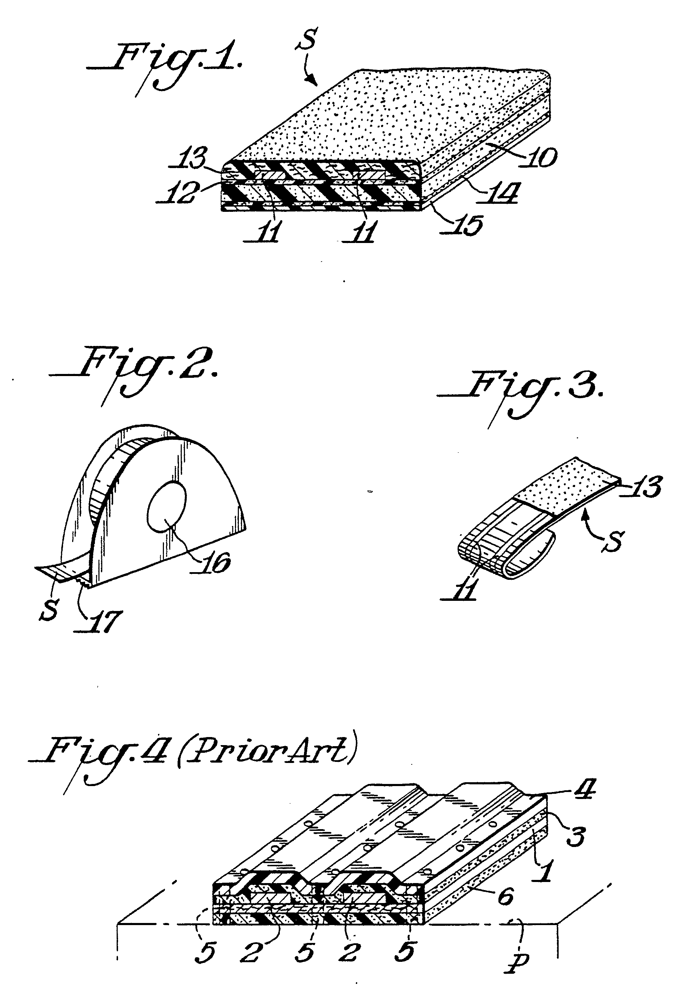

In the sensor shown in Figure 1, two strip-like conductors 11,11 made of a soft metal foil, such as aluminium foil, are installed parallel to each other on the top surface of a soft, thin insulating tape 10 made of an insulating material such as a polyester resin, the conductors 11,11 being spaced from each other and bonded to the top surface of the insulating tape 10 by an insulating adhesive layer 12. The conductors 11,11 are covered by a layer 13 of a material which is capable of absorbing the liquid to be detected, and the top surface of this covering layer 13 is exposed to the environment.

In this embodiment, a water-soluble non-woven fabric consisting of resin fibres is used as the material forming the covering layer 13. Other absorbent materials may of course be used instead, such as a common absorbing paper or fabric material. It is sufficient that the material has liquid-absorbing properties and does not conduct electricity in a dry state.

An adhesive layer 14 is installed on the bottom surface of the insulating tape 10 so that the sensor can be attached to a desired surface, and a pull-off release strip 15 is installed over the adhesive layer 14 to protect it until the sensor is to be attached to the surface ready for use.

As shown in Figure 2, the sensor S may be manufactured in the form of a tape which can be wound on a storage/dispenser reel 16. When required, a desired length of the sensor tape can be pulled from the reel and cut-off by means of a cutter 17. The release strip 15 is then removed, and the cut sensor length S is attached to the area where detection is to be performed. Water is applied and rubbed into one end portion of the covering layer 13 of the sensor, and since the layer 13 in this embodiment consists of a water-soluble non-woven fabric, the rubbing causes the layer 13 to come off easily in the rubbed region as shown in Figure 3. The conductors 11,11 are thus exposed in the end area where the covering layer 13 has been rubbed away, and form terminals which can be connected to a detection circuit by means of crocodile clips.

In the case of a sensor attached as just described, the covering layer 13 forming the top surface of the sensor S is exposed. Accordingly, water which contacts this layer 13 is easily and rapidly absorbed. The conductors 11,11 are short-circuited by the absorbed water, and the resulting change in electrical characteristics (resistance value) is measured by the detection circuit to detect the occurrence of the leakage in the vicinity of the sensor S. The permeation of water from the upper surface of the sensor S where the layer 13 is located is dramatic, and highly-sensitive detection is therefore possible in cases where leakage occurs onto the upper surface of the sensor S.

For example, the case where the sensor S is attached to the inner surface of a diaper cover may be considered as an actual example of use. In such a case, the diaper cloth is positioned over the upper surface of the sensor S, and when the diaper cloth becomes wet, this is reliably and rapidly detected with a high level of sensitivity. Thus, the detection of wet diapers can be accomplished simply and reliably.

The sensor is soft and pliable, simple in construction, inexpensive to manufacture, and disposable. The sensor is especially suitable for use in clinical and child welfare applications. In such cases, since the non-woven fabric which constitutes the covering layer is water-soluble, the formation of a terminal area on the sensor is extremely easy, and connection to the detection circuit is simple.

In the example described, an adhesive layer 14 is installed on the under surface of the insulating tape. However, it will be appreciated that it is not absolutely necessary to provide such an adhesive layer. Also, the conductors 11,11 may be formed by wires instead of foil strips.

## Claims

1. A leakage sensor for detecting leakage of electrically conductive liquids comprising a pair of spaced electrical conductors (11,11) mounted substantially parallel to eachother on the surface of an electrically insulating tape (10), characterised by a layer of material (13) capable of absorbing the leakage liquid to be detected covering the conductors (11,11) and having its outer surface exposed to the environment.

2. A sensor according to claim 1 wherein the conductors (11,11) are formed by foil strips.

3. A sensor according to claim 1 wherein the conductors (11,11) are formed by wires.

4. A sensor according to any one of the preceding claims, wherein the matarial (13( which is capable of absorbing the leakage liquid to be detected is a non-woven fabric.

5. A sensor according to any one of the preceding claims, wherein the material (13) which is capable of absorbing the leakage liquid to be detected is also soluble in said liquid.

*Fig.1.*  S

13
12
11    11

10
14
15

*Fig.2.*

16

S    17

*Fig.3.*

13
S
11

*Fig.4 (PriorArt)*

4
3
1
6

5   2   5   2   5

P